# EUROPEAN PATENT APPLICATION

(11) **EP 2 781 764 A1**
(43) Date of publication of application: **24.09.2014**
(21) Application number: 13160110.6
(22) Date of filing: 20.03.2013
(51) Int. Cl.: F16B 5/01, G01M 99/00, G01L 5/00, G01N 19/04

(54) **Device for testing out-of-plane tensile strength and method of testing of out-of-plane tensile strength of a load application element fitted to a composite sandwich panel**

(71) Applicant: RUAG Schweiz AG, 8052 Zürich (CH)
(72) Inventor: Kobler, Stefan, 4623 Neuendorf (CH); Dr. Gröbelbauer, Hans-Peter, 6340 Baar (CH); Hunziker, Daniel, 4460 Gelterkinden (CH)
(74) Representative: OK pat AG

(57) **Abstract**

A device (80) and corresponding method for testing out-of-plane tensile strength of a load application element (50) fitted to a composite sandwich panel (5), comprising a pull member (81), a push member (85), a force distribution member (87) and a force gauge (82, 82.1 - 82.3), wherein the pull member (81) is arranged and configured for applying a tensile strength testing force (T) onto the load application element (50), wherein the push member (85) is connected to the pull member (81) so that the a reaction force (R) of the testing force (T) distributed on the surface of the composite sandwich panel (5) around the load application element (50) via said force distribution member (87); and wherein the force gauge (82) is configured for measuring said reaction force (R) between the push member (85) and the surface of the composite sandwich panel (5).

## Description

### FIELD OF THE INVENTION

The present invention relates to a device for testing out-of-plane tensile strength of a load application element fitted to a composite sandwich panel, in particular of a load application element fitted into a cut-out of a composite sandwich panel, cut-out extending through a face sheet and into a lightweight core of the composite sandwich panel.

The present invention further relates to a method of testing of out-of-plane tensile strength of a load application element fitted to a composite sandwich panel, in particular a method of testing the out-of-plane tensile strength of a load application element fitted into a cut-out of a composite sandwich panel, cut-out extending through a face sheet and into a lightweight core of the composite sandwich panel.

### BACKGROUND OF THE INVENTION

Composite sandwich panels are a special type of composite materials/structures fabricated by attaching at least one but preferably two relatively thin but stiff face sheets to a lightweight but thick core. The core material is normally of relatively low strength material, but its higher thickness provides the sandwich composite with high bending stiffness with overall low density. Composite sandwich panels are commonly made by layering a core material between two thin layers that provide strength in tension. The lightweight core is usually attached to the face sheets by adhesive bonding and/or metal brazing. This forms a plate-like assembly.

The face sheets are usually laminates of glass and/or carbon fiber-reinforced thermoplastics and/or thermoset polymers such as unsaturated polyesters, epoxies. Alternatively sheet metal, preferably of lightweight metals such as aluminium, may also be employed for face sheets of sandwich panels. The lightweight core of sandwich panels are usually open- and/or closed-cell-structured foams (such as polyvinylchloride, polyurethane, polyethylene or polystyrene foams, syntactic foams) or open- and/or closed-cell metal foams, preferably of lightweight metals such as aluminium.

Quite often honeycomb structures, preferably of lightweight metals such as aluminium or fibreglass and advanced composite materials, are preferred as lightweight core due to their excellent strength to weight ratio. Honeycomb structures are structures that have the geometry of a honeycomb to allow the minimization of the amount of used material to reach minimal weight. The geometry of honeycomb structures can vary widely but the common feature of all such structures is an array of hollow cells formed between thin vertical walls. The cells are often columnar and hexagonal in shape. A honeycomb shaped structure provides a material with minimal density and relative high transverse shear strength.

The behaviour of a composite sandwich panels is orthotropic, hence the panels react differently depending on the orientation of the structure. Therefore it is necessary to distinguish between in-plane forces and out-of-plane forces. In a composite sandwich panel the face sheets are provided for transferring in-plane forces while the lightweight core is provided for high transverse shear strength.

Composite sandwich panels are widely used where flat or slightly curved surfaces are needed and their high strength-to-weight ratio is valuable. They are widely used in the aerospace industry for this reason, and have been featured in aircraft and rockets for long time. While sandwich panels are capable of carrying high loads, load introduction and/or anchorage of various components requires specific solutions due to said different strength depending on the direction of the applied forces. In order to make full use of the advanced properties of a composite sandwich panel and to avoid damage thereof, the static and dynamic loads from attached components such as lenses, antennas, etc. must be optimally introduced into the structure. As aircrafts, spacecrafts, rockets, satellites, etc. are subject to strong vibrations, the attachment points of components to the sandwich panels carrying them are enormous.

The anchorage of components for load introduction is preferably achieved by means of inserts fitted into the sandwich structure. Such load application elements are fitted into composite sandwich panels either by conventional methods using special tools or by using a new inventive insert and corresponding method as disclosed in the European Patent Applications EP13160089.2 respectively EP13160092.6.

Regardless of the method of fitting the load application elements into the composite sandwich panel, the tensile strength must be tested to ensure the imposed strict requirements of load bearing capabilities are satisfied. At the same time the testing may neither damage the sandwich panel nor the load application element. Furthermore sandwich panels with an uneven or curved outer surface pose special difficulties.

### TECHNICAL PROBLEM TO BE SOLVED

The objective of the present invention is thus to provide a device and method for testing the tensile strength of a load application element within a sandwich panel, which provide for reliable, reproducible results even in case of uneven or curved sandwich panels while at the same time causing no damage to the sandwich panel.

### SUMMARY OF THE INVENTION

The above identified objective of providing a device for testing the tensile strength of a load application element within a sandwich panel, which provide for reliable, reproducible results even in case of uneven or curved sandwich panels while at the same time causing no damage to the sandwich panel is accomplished according to the present invention by a device comprising a pull member, a push member arranged displacebly with respect to the pull member, a force distribution member and a force gauge arranged between said push member and said force distribution member. The pull member is arranged and configured for applying a tensile strength testing force onto the load application element. The push member is mechanically connected to the pull member so that a reaction force - resulting from applying said tensile strength testing force - is transmitted and distributed on the surface of the composite sandwich panel around the load application element via said force distribution member. The force gauge is configured for measuring said reaction force between the push member and the surface of the composite sandwich panel.

The above identified objective of providing a method for testing the tensile strength of a load application element within a sandwich panel, which provide for reliable, reproducible results even in case of uneven or curved sandwich panels while at the same time causing no damage to the sandwich panel is accomplished by a method comprising the steps of:
- providing a testing device comprising a pull member, a push member arranged displacebly with respect to and mechanically connected to the pull member, a force distribution member and a force gauge arranged between said push member and said force distribution member;
- placing said testing device over the composite sandwich panel such that the force distribution member is arranged between the surface of the composite sandwich panel and the force gauge and around said load application element;
- applying and gradually increasing a tensile strength testing force up to a predefined threshold value onto the load application element via the pull member thereby causing the push member to transmit and distribute a resulting reaction force as surface pressure on the surface of the composite sandwich panel around the load application element via the force distribution member; and
- measuring the reaction force between the push member and the surface of the composite sandwich panel by means of the force gauge, a decrease of the measured reaction force while the tensile strength testing force is gradually increased being an indication of a failure of the composite sandwich panel and/or its load application element.

### ADVANTAGEOUS EFFECTS

The most important advantage of the present invention is its capability to test of out-of-plane tensile strength of a load application element fitted to a composite sandwich panel even if the surface of the composite sandwich panel is curved or uneven. At the same time the device and method of the present invention provide for reproducible testing results. Last but not least, damage to the panel or the insert during testing can be prevented by distributing the testing force on the surface of the panel and around the load application element by means of the force distribution member.

### BRIEF DESCRIPTION OF THE DRAWINGS

Further characteristics and advantages of the invention will in the following be described in detail by means of the description and by making reference to the drawings. Which show:
- Fig. 1: a perspective view of a known composite sandwich panel;
- Fig. 2: a perspective cross section illustrating an insert as load application element just before being fitted into a composite sandwich panel;
- Fig. 3A: a perspective cross section of an insert as load application element fitted into a cut-out in a composite sandwich panel;
- Fig. 3B: a lateral cross section of an insert fitted into a cut-out in a composite sandwich panel;
- Fig. 4A: a perspective cross section of a device for testing out-of-plane tensile strength of a load application element fitted to a composite sandwich panel according to the present invention;
- Fig. 4B: a top cross section view of the device of figure 4A;
- Fig. 5A: a perspective cross section of a preferred embodiment of a testing device according to the present invention, placed over a composite sandwich panel - in its resting state, i.e. no tensile strength testing force being applied;
- Fig. 5B: a lateral cross section of the testing device of figure 5A- in its resting state, i.e. no tensile strength testing force being applied;
- Fig. 6: a lateral cross section of the testing device of figure 5B- in its activated state, i.e. a tensile strength testing force being applied;
- Fig. 7: a lateral cross section of a particularly preferred embodiment of the testing device according to the present invention.
Note: The figures are not drawn to scale, are provided as illustration only and serve only for better understanding but not for defining the scope of the invention. No limitations of any features of the invention should be implied form these figures.

### DESCRIPTION OF PREFERRED EMBODIMENTS

Further characteristics and advantages of the invention will in the following be described in detail by means of the description and by making reference to the drawings. Which show:

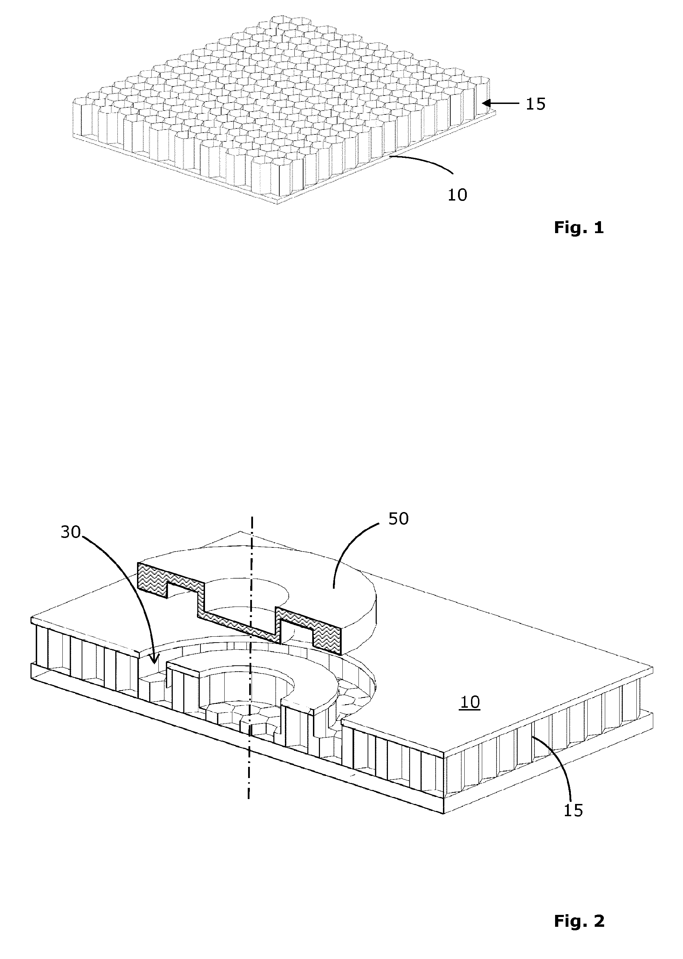

Fig. 1 shows a perspective view of a preferred embodiment of the composite sandwich panel 5, namely a composite sandwich panel 5 with a face sheet 10 and a lightweight core 15. While sandwich panels with two face sheets are more common and also preferred, the present inventive concept is applicable to composite sandwich panels with only one face sheet 10. The composite sandwich panel 5 (without the inventive cut out described later) itself is produced by known methods by attaching the relatively thin but stiff face sheets 10 to the lightweight but thick core 15. The core material is normally of relatively low strength material, but its higher thickness provides the sandwich composite with high bending stiffness with overall low density. The Composite sandwich panel 5 is preferably made by layering a lightweight core 15 between the two thin face sheets that provide strength in tension.

The face sheet(s) 10 of the composite sandwich panel 5 comprise(s) one or more of the following:
- laminates of glass and/or carbon fiber-reinforced thermoplastics and/or thermoset polymers such as unsaturated polyesters, epoxies; and/or
- sheet metal, preferably of lightweight metals such as aluminium.

While all illustrated figures shows a honeycomb structure as the lightweight core 15, the lightweight core 15 of the present invention comprises (but is not limited to) one or more of the following:
- open- and/or closed-cell-structured foams such as polyvinylchloride, polyurethane, polyethylene or polystyrene foams, syntactic foams;
- open- and/or closed-cell metal foam, preferably of lightweight metals such as aluminium;
- honeycomb structures, preferably of lightweight metals such as aluminium or fibreglass and advanced composite materials.

The lightweight core 15 is preferably attached to the first face sheet 10 and/or said second face sheet 20 by adhesive bonding and/or metal brazing and/or welding and/or soldering.

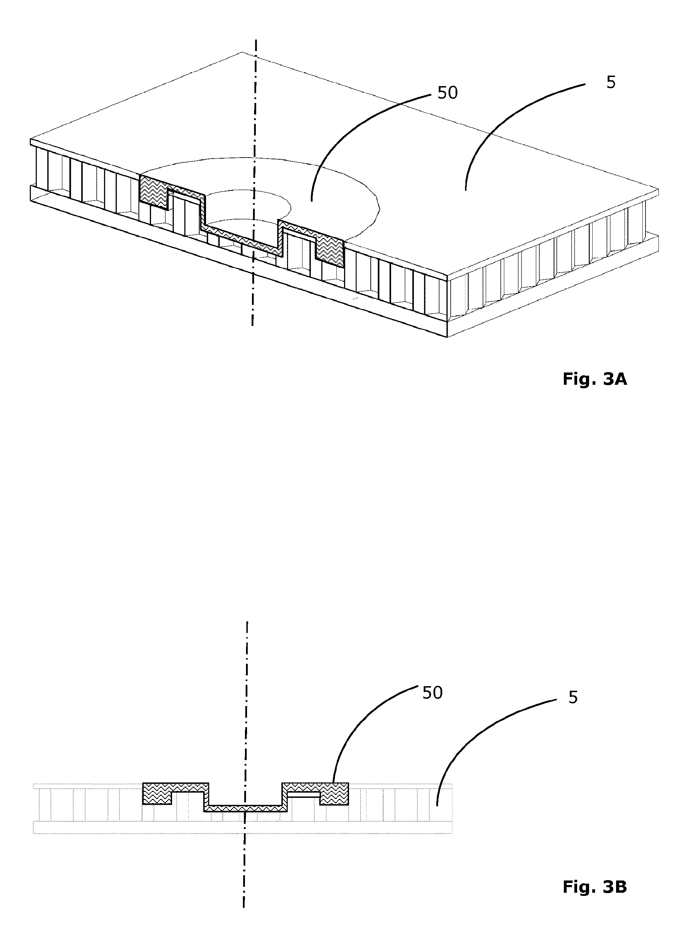

The perspective cross section of figure 2A illustrates a preferred embodiment of the load application element, namely an insert 50 just before being fitted into a cut-out 30 of the composite sandwich panel 5, the cut-out 30 extending through the first face sheet 10 and into its lightweight core 15 of the composite sandwich panel 5, while figures 3A and 3B show a perspective respectively a lateral cross section of the insert 50 already fitted into a composite sandwich panel 5.

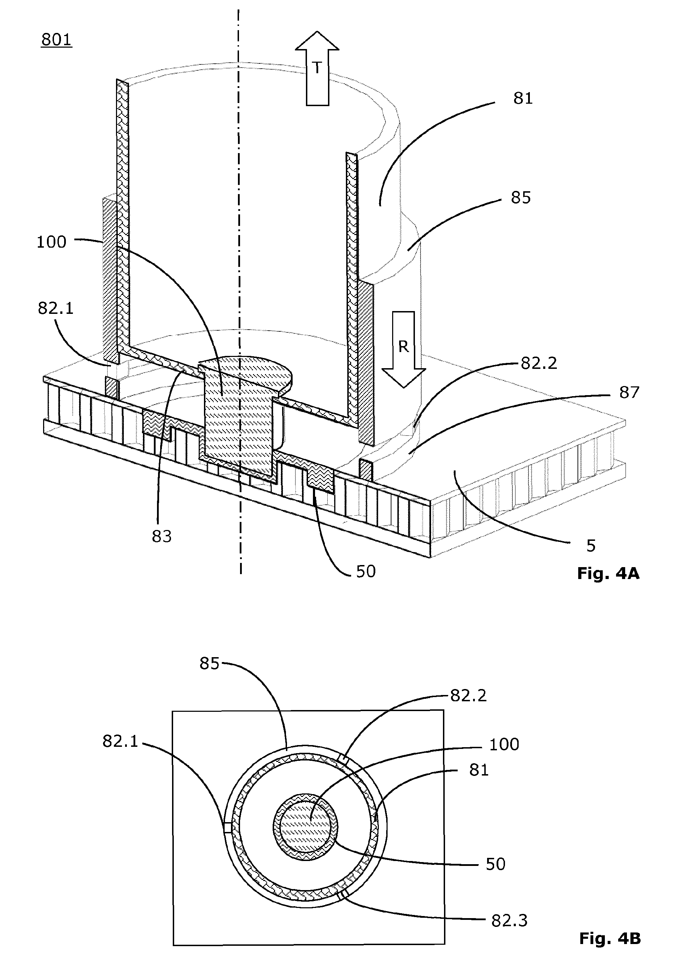

Fig. 4A shows a perspective cross section of the device 80 for testing out-of-plane tensile strength of a load application element such as an insert 50 fitted to a composite sandwich panel 5 according to the present invention. The major components of the device 80 are the pull member 81, the push member 85, the force distribution member 87 and the force gauge 82, the push member 85 being arranged displacebly with respect to the pull member 81 and the force gauge 82 being arranged between said push member 85 and said force distribution member 87.

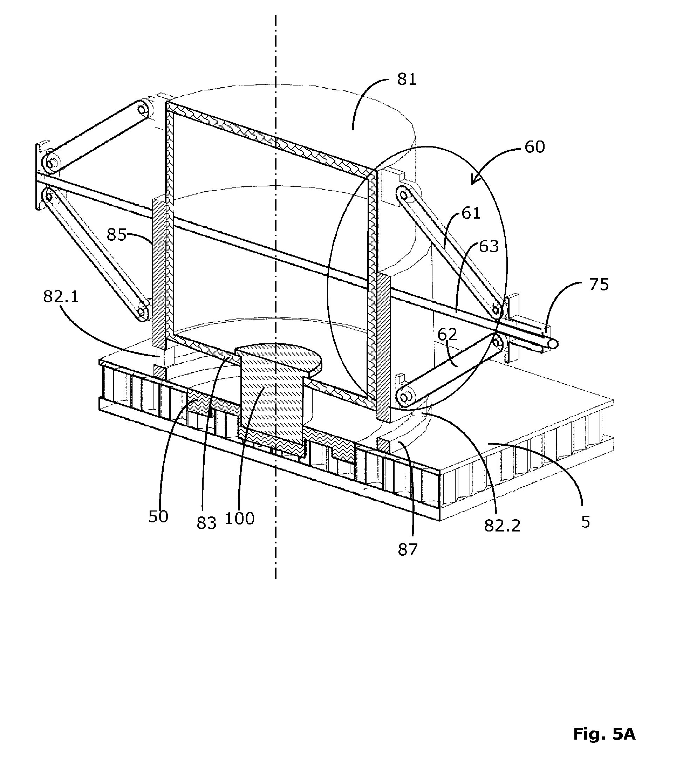

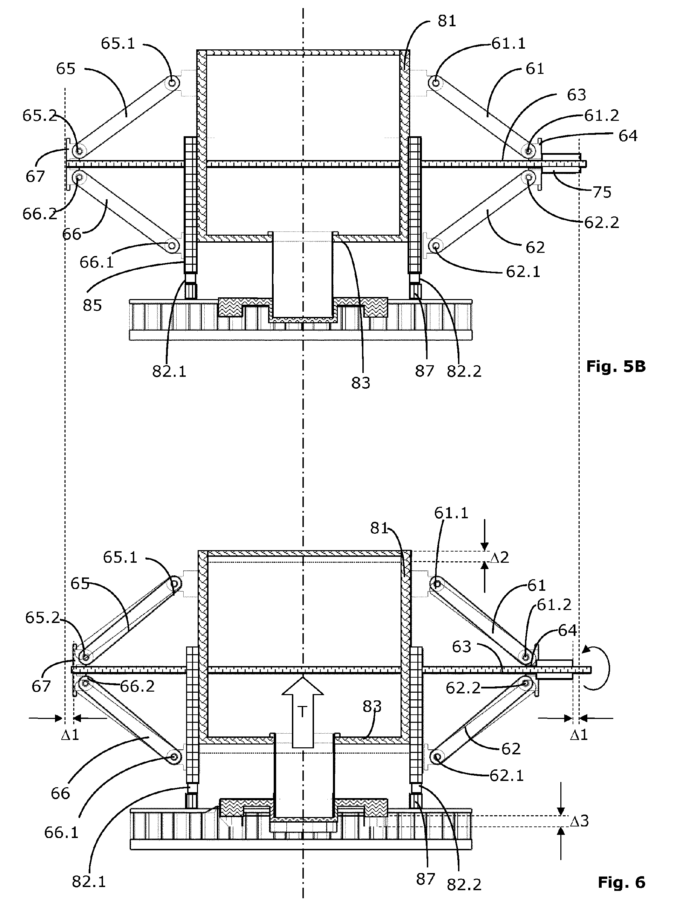

Also shown on figure 4A (and figures 5 to 7) is a grabber 83 attached to the pull member 81 and configured for releasably grabbing a test pin 100 received in said insert 50 for applying said testing force T onto the insert 50. The grabber 83 preferably grabs the test pin 100 by a shoulder or other suitable protrusion thereof. The test pin 100 may be fixed into the load application element 50 by means of a thread, hook, bolt or other suitable means.

In preferred embodiment(s) of the present invention, the pull member 81 is arranged slideably within, preferably concentrically within the push member 85. In an even further preferred embodiment(s) of the invention - embodiments illustrated in the figures - the push member 85 comprises an outer cylindrical tube and the pull member 81 comprises an inner cylindrical element slideably arranged within the outer cylindrical tube. Furthermore the force distribution member 87 preferably comprises an essentially circular ring, arranged essentially concentrically with said inner essentially cylindrical tube.

Fig. 4B showing a top view of the device 80 of figure 4A illustrates well the concentric arrangement of the push member 85 and the pull member 81.

As depicted on figure 4A, the pull member 81 is arranged and configured for applying a tensile strength testing force T onto the load application element 50 while the push member 85 is mechanically connected to the pull member 81 so that the reaction force R - resulting from applying said tensile strength testing force T - is transmitted and distributed on the surface of the composite sandwich panel 5 around the load application element 50 via said force distribution member 87. For testing the out-of-plane tensile strength of a load application element 50 it is essential that the force distribution member 87 does not come into contact with the load application element 50.

The force gauge 82 is arranged between the push member 85 and the force distribution member 87 and configured for measuring said reaction force R between the push member 85 and the surface of the composite sandwich panel 5. For compensating for an uneven or bent surface of the composite sandwich panel 5, the force distribution member 87 preferably comprises a lower elastic segment.

In the most preferred embodiment(s) of the present invention illustrated in the figures, the force gauge 82 comprises at least three non-collinearly arranged load cells 82.1 - 82.3. As well illustrated on figure 4B the at least three load cells 82.1 - 82.3 are arranged essentially uniformly around the circumference of the outer cylindrical tube of the push member 85 respectively around the circular ring of the force distribution member 87. In this embodiment, the reaction force R between the push member 85 and the surface of the composite sandwich panel 5 will be measured as a sum of the measurement of said at least three load cells 82.1 - 82.3.

The testing device 80 of the present invention is operated in the following manner:
- Placing the testing device 80 over the composite sandwich panel 5 such that the force distribution member 87 rests on the surface of the composite sandwich panel 5 without being in contact with the application element 50, so that the force distribution member 87 is arranged between the surface of the composite sandwich panel 5 and the push member 85 - via the force gauge 87;
- applying and gradually increasing a tensile strength testing force T up to a predefined threshold value onto the load application element 50 via the pull member 81 thereby causing the push member 85 to transmit and distribute a resulting reaction force R as surface pressure on the surface of the composite sandwich panel 5 around the load application element 50 via the force distribution member 87; and
- measuring the reaction force R between the push member 85 and the surface of the composite sandwich panel 5. A decrease of the measured reaction force R, while the a tensile strength testing force T is gradually increased, is an indication of a failure of the composite sandwich panel 5 and/or its load application element 50.

According to the most preferred embodiments of the present invention, the testing of the out-of-plane tensile strength further comprises the steps of:
- fitting a test pin 100 into the insert 50 of the composite sandwich panel 5, preferably by form-fitting and/or force-fitting;
- providing for a grabber 83 attached to the pull member 81 of the testing device 80;
   wherein the tensile strength testing force T is applied to the insert 50 by said grabber 83 pulling on said testing pin 100.

The reaction force R between the push member 85 and the surface of the composite sandwich panel 5 is preferably measured as a sum of the measurement of the at least three load cells 82.1 - 82.3 arranged around the circumference of the force distribution member 87.

Figures 5A through 5B show a particularly preferred embodiment wherein the pull member 81 is displaceable with respect to the push member 85 in that the push member 85 is mechanically connected to the pull member 81 by means of a lever mechanism 60 configured for forcing the pull member 81 and the push member 85 apart thereby applying testing force T. As illustrated on figures 5A through 5B, the lever mechanism 60 comprises a first lever arm 61; a second lever arm 62 and a lead screw 63.

The first lever arm 61 has a first end 61.1 pivotably connected to the pull member 81 and a second end 61.2 pivotably connected to a first trunnion member 64 while the second lever arm 62 has a first end 62.1 pivotably connected to the push member 85 and a second end 62.2 pivotably connected to the first trunnion member 64. The lead screw 63 is rotatably received by the first trunnion member 64.

The figures show symmetrical embodiment(s) of the lever mechanism 60 further comprising a third lever arm 65 and a fourth lever arm 66. The third lever arm 65 has a first end 65.1 pivotably connected to the pull member 81 and a second end 65.2 pivotably connected to a second trunnion member 67 while the fourth lever arm 66 has a first end 66.1 pivotably connected to the push member 85 and a second end 66.2 pivotably connected to the second trunnion member 67, wherein the lead screw 63 is rotatably received by said second trunnion member 67.

As seen of the figures, the entire the lever mechanism 60 thereby forms a scissor-jack-like arrangement, the lever mechanism 60 being configured for increasing respectively decreasing the distance between the first end 61.1 of the first lever arm 61 and the first end 62.1 of the second lever arm 62 by rotation of the lead screw 63, thereby applying said testing force T. The lead screw 63 may be turned by any suitable means, preferably by an electric motor 75.

Fig. 5A shows a perspective cross section of the testing device 80 according to the present invention placed over the composite sandwich panel 5 with the force distribution member 87 situated around the load application element 50. Figure 5A depicts the testing device 80 in its resting state, i.e. no tensile strength testing force T being applied.

Fig. 5B shows a lateral cross section of the testing device 80 of figure 5A also in its resting state, i.e. no tensile strength testing force being applied illustrating the scissor-jack-like arrangement formed by the four lever arms 61, 62, 65, 66 of the lever mechanism 60 and the lead screw 63.

Fig. 6 in turn depicts a lateral cross section of the testing device 80 of figure 5 in its activated state when a tensile strength testing force T is applied by means of the electric motor 75 turning the lead screw 63 which causes the distance between the first trunnion member 64 and second trunnion member 67 to decrease. This forces the first lever arm 61 and second lever arm 62 respectively the third lever arm 65 and the a fourth lever arm 66 apart. As the first ends 61.1, 65.1 of the first and third lever arms 61, 65 are pivotably connected to the pull member 81, respectively the first ends 62.1, 66.1 of the second respectively fourth lever arms 62, 66 are pivotably connected to the push member 85, forcing the first lever arm 61 and second lever arm 62 respectively the third lever arm 65 and the a fourth lever arm 66 apart leads to the pull member 81 to slide further out of the push member 85 thereby applying said testing force T respectively the reaction force R as surface pressure on the surface of the composite sandwich panel 5 around the load application element 50 via the force distribution member 87.

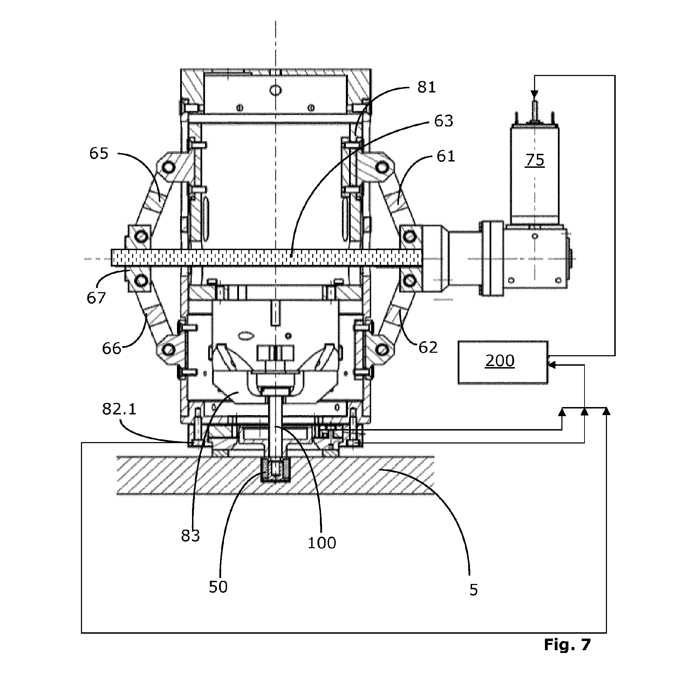

Fig. 7 shows a lateral cross section of a particularly preferred embodiment of the testing device 80 according to the present invention comprising a control unit 200 receiving signals from the three loads cells 82.1 - 82.3 of the force gauge 82 and gradually increasing the tensile strength testing force T up to a predefined threshold value by means of the electric motor 75. The control unit 200 measures the reaction force R between the push member 85 and the surface of the composite sandwich panel 5 and is configured to detect a decrease of the measured reaction force R while the tensile strength testing force T is gradually increased and signal that the composite sandwich panel 5 and/or its load application element 50 failed the out-of-plane tensile strength test. It will be understood that many variations could be adopted based on the specific structure hereinbefore described without departing from the scope of the invention as defined in the following claims.

**REFERENCE LIST:**

| | | |
|---|---|---|
| composite sandwich panel | | 5 |
| first face sheet | | 10 |
| lightweight core | | 15 |
| second face sheet | | 20 |
| cut-out | | 30 |
| insert | | 50 |
| lever mechanism | | 60 |
| first lever arm | | 61 |
| | first end (of first lever arm) | 61.1 |
| | second end (of first lever arm) | 61.2 |
| second lever arm | | 62 |
| | first end (of second lever arm) | 62.1 |
| | second end (of second lever arm) | 62.2 |
| lead screw | | 63 |
| first trunnion member | | 64 |
| third lever arm | | 65 |
| | first end (of third lever arm) | 65.1 |
| | second end (of third lever arm) | 65.2 |
| fourth lever arm | | 66 |
| | first end (of fourth lever arm) | 66.1 |
| | second end (of fourth lever arm) | 66.2 |
| second trunnion member | | 67 |
| electric motor | | 75 |
| device for testing out-of-plane tensile strength | | 80 |
| pull member | | 81 |
| force gauge | | 82 |
| | load cell (of force qauqe) | 82.1 - 82.3 |
| push member | | 85 |
| test pin | | 100 |
| tensile strenqth testinq force | | T |
| reaction force (of the testing force T) | | R |
| control unit | | 200 |

## Claims

1. A device (80) for testing out-of-plane tensile strength of a load application element (50) fitted to a composite sandwich panel (5),
the device (1) comprising:
- a pull member (81);
- a push member (85) arranged displacebly with respect to the pull member (81);
- a force distribution member (87); and
- a force gauge (82) arranged between said push member (85) and said force distribution member (87);
wherein:
- the pull member (81) is arranged and configured for applying a tensile strength testing force (T) onto the load application element (50); and
- the push member (85) is mechanically connected to the pull member (81) so that a reaction force (R) - resulting from applying said tensile strength testing force (T) - is transmitted and distributed on the surface of the composite sandwich panel (5) around the load application element (50) via said force distribution member (87);
- the force gauge (82) is configured for measuring said reaction force (R) between the push member (85) and the surface of the composite sandwich panel (5).

2. A device (80) for testing out-of-plane tensile strength of a load application element (50) fitted into a composite sandwich panel (5) according to claim 1, wherein said force gauge (82) comprises at least three non-collinearly arranged load cells (82.1 - 82.3).

3. A device (80) for testing out-of-plane tensile strength of a load application element (50) fitted into a composite sandwich panel (5) according to claim 1, further comprising a grabber (83) attached to the pull member (81) and configured for releaseably grabbing a test pin (100) received in said load application element (50) for applying said testing force (T) onto the load application element (50).

4. A device (80) for testing out-of-plane tensile strength of a load application element (50) fitted into a composite sandwich panel (5) according to one of the preceding claims, wherein the force distribution member (87) comprises an elastic segment configured for compensating for an uneven or bent surface of the composite sandwich panel (5).

5. A device (80) for testing out-of-plane tensile strength of a load application element (50) fitted into a composite sandwich panel (5) according to one of the claims 1 to 4,
wherein:
- the pull member (81) is arranged slideably within, preferably essentially concentrically within the push member (85);
- the pull member (81) is configured for applying said testing force (T) onto the load application element (50) by being forced to slide away from the surface of the composite sandwich panel (5).

6. A device (80) for testing out-of-plane tensile strength of a load application element (50) fitted into a composite sandwich panel (5) according to one of the claims 2 to 5,
wherein:
- the push member (85) comprises an outer essentially cylindrical tube;
- the pull member (81) comprises an inner essentially cylindrical tube slideably arranged within the outer cylindrical tube;
- the force distribution member (87) comprises an essentially circular ring, preferably arranged essentially concentrically with said inner essentially cylindrical tube; and
- the at least three load cells (82.1 - 82.3) are arranged essentially uniformly around the circumference of the outer essentially cylindrical tube.

7. A device (80) for testing out-of-plane tensile strength of a load application element (50) fitted into a composite sandwich panel (5) according to one of the preceding claims,
wherein:
- the composite sandwich panel (5) comprises a first face sheet (10) attached to a lightweight core (15), and
- said load application element (50) is an insert (50) being fitted into a cut-out (30) of the composite sandwich panel (5) extending through its first face sheet (10) and into its lightweight core (15).

8. A device (80) for testing out-of-plane tensile strength of a load application element (50) fitted into a composite sandwich panel (5) according to one of the preceding claims,
wherein the pull member (81) is displaceable with respect to the push member (85) in that the push member (85) is mechanically connected to the pull member (81) by means of a lever mechanism (60) configured for forcing the pull member (81) and the push member (85) apart thereby applying testing force (T).

9. A device (80) for testing out-of-plane tensile strength of a load application element (50) fitted into a composite sandwich panel (5) according to claim 8,
wherein the lever mechanism (60) comprises:
- a first lever arm (61), with a first end (61.1) pivotably connected to the pull member (81) and a second end (61.2) pivotably connected to a first trunnion member (64);
- a second lever arm (62) with a first end (62.1) pivotably connected to the push member (85) and a second end (62.2) pivotably connected to the first trunnion member (64);
- a lead screw (63) rotatably received by the first trunnion member (64);
and wherein the lever mechanism (60) is configured for increasing respectively decreasing the distance between the first end (61.1) of the first lever arm (61) and the first end (62.1) of the second lever arm (62) by rotation of the lead screw (63) forcing the pull member (81) and the push member (85) apart, thereby applying said testing force (T),
the lead screw (63) being preferably rotated by means of an electric motor (75).

10. A device (80) for testing out-of-plane tensile strength of a load application element (50) fitted into a composite sandwich panel (5) according to claim 9, wherein said lever mechanism (60) is a symmetrical lever mechanism, further comprising:
- a third lever arm (65), with a first end (65.1) pivotably connected to the pull member (81) and a second end (65.2) pivotably connected to a second trunnion member (67);
- a fourth lever arm (66) with a first end (66.1) pivotably connected to the push member (85) and a second end (66.2) pivotably connected to the second trunnion member (67),
wherein the lead screw (63) is rotatably received by said second trunnion member (67), and wherein
the lever mechanism (60) forms a scissor-jack-like arrangement.

11. Method of testing of out-of-plane tensile strength of a load application element (50) fitted to a composite sandwich panel (5), preferably a composite sandwich panel (5) having a first face sheet (10) attached to a lightweight core (15), the method comprising the steps of:
- providing a testing device (80) comprising a pull member (81), a push member (85) arranged displacebly with respect to and mechanically connected to the pull member (81), a force distribution member (87) and a force gauge (82) arranged between said push member (85) and said force distribution member (87);
- placing said testing device (80) over the composite sandwich panel (5) such that the force distribution member (87) is arranged between the surface of the composite sandwich panel (5) and the force gauge (82) and around said load application element (50);
- applying and gradually increasing a tensile strength testing force (T) up to a predefined threshold value onto the load application element (50) via the pull member (81) thereby causing the push member (85) to transmit and distribute a resulting reaction force (R) as surface pressure on the surface of the composite sandwich panel (5) around the load application element (50) via the force distribution member (87); and
- measuring the reaction force (R) between the push member (85) and the surface of the composite sandwich panel (5) by means of the force gauge (82), a decrease of the measured reaction force (R) while the tensile strength testing force (T) is gradually increased being an indication of a failure of the composite sandwich panel (5) and/or its load application element (50).

12. Method of testing of out-of-plane tensile strength according to claim 11, further comprising the steps of:
- fitting a test pin (100) into the insert (50) of the composite sandwich panel (5), preferably by form-fitting and/or force-fitting;
- providing for a grabber (83) attached to the pull member (81) of the testing device (80);
wherein said tensile strength testing force (T) is applied to the insert (50) by said grabber (83) pulling on said testing pin (100).

13. Method of testing of out-of-plane tensile strength according to claim 11 or 12, wherein:
- said force gauge (82) is provided as at least three load cells (82.1 - 82.3) arranged non-collinearly around said load application element (50),
- the reaction force (R) between the push member (85) and the surface of the composite sandwich panel (5) is measured as a sum of the measurement of said at least three load cells (82.1 - 82.3).

14. Method of testing of out-of-plane tensile strength according to one of the claims 11 to 13, further comprising the step of providing said force distribution member (87) with an elastic segment configured for compensating for an uneven or bent surface of the composite sandwich panel (5).

15. Method of testing of out-of-plane tensile strength according to one of the claims 11 to 14, wherein said tensile strength testing force (T) is applied to the load application element (50) by forcing the pull member (81) and the push member (85) apart by means of a lever mechanism (60), preferably a scissor-jack-like lever mechanism configured such that by rotation of a lead screw (63) acting on an arrangement of lever arms (61, 62, 65, 66) the pull member (81) and the push member (85) are forced apart, said lead screw (63) being preferably rotated by means of an electric motor (75).
